# EUROPÄISCHE PATENTSCHRIFT

(11) **EP 3 736 872 B1**
(45) Veröffentlichungstag und Bekanntmachung des Hinweises auf die Patenterteilung: **10.07.2024**
(21) Anmeldenummer: 19173789.9
(22) Anmeldetag: 10.05.2019
(51) Int. Cl.: H01M 10/48, H01M 10/658, H01M 50/211, H01M 50/247, H01M 50/296, B25F 5/00

(54) **AKKUPACK UND BEARBEITUNGSSYSTEM**
BATTERY PACK AND PROCESSING SYSTEM
BLOC D'ACCUMULATEUR ET SYSTÈME D'USINAGE

(43) Veröffentlichungstag der Anmeldung: 11.11.2020
(73) Patentinhaber: Andreas Stihl AG & Co. KG, 71336 Waiblingen (DE); Murata Manufacturing Co., Ltd., Nagaokakyo-shi, Kyoto 617-8555 (JP)
(72) Erfinder: SAUERTEIG, Daniel, 71394 Kernen im Remstal (DE); SCHOLL, Julien, 71336 Waiblingen (DE); MISAWA, Daiki, Koriyama-shi, 963-0531 Fukushima (JP); VON HOFEN, Malte, 70197 Stuttgart (DE); CHINEN, Atsushi, Koriyama-shi, 963-0531 Fukushima (JP); WAGNER, Daniel, 73650 Winterbach (DE); WILKA, Marcel, 73560 Böbingen (DE); SATO, Takayuki, Koriyama-shi 963-0531 Fukushima (JP)
(74) Vertreter: Patentanwälte Ruff, Wilhelm, Beier, Dauster & Partner mbB

(56) Entgegenhaltungen:
- EP-A1- 0 593 869
- EP-A2- 2 187 472
- CN-A- 107 946 680
- DE-A1- 102012 207 999
- DE-A1- 102016 203 424

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung und auf ein Bearbeitungssystem aufweisend einen solchen Akkupack und ein elektrisch angetriebenes Bearbeitungsgerät.

Die EP 0 593 869 A1 offenbart einen Akkupack für ein elektrisches Gerät, mit zwei elektrischen Kontakten, einem Temperaturfühler zum Abfühlen der Temperatur der Zellen des Akkus, einer Schalteinrichtung, die mit dem Temperaturfühler wirkverbunden ist und bei Erreichen einer vorbestimmten Auslösetemperatur die Verbindung der Akkuzellen mit einem Kontakt unterbricht.

Die CN 107 946 680 A betrifft das technische Gebiet der Herstellung von Lithiumbatteriespacks, insbesondere eines Lithiumbatteriepacks, der auf einer Selbstschutz-Fernwarnung basiert. Der Lithiumbatteriepack ist dadurch gekennzeichnet, dass eine Batterieüberwachung außerhalb eines Gehäuses vorgesehen ist und einen Kontroller, eine Vibrationsinformationssammelschaltung, einen Vibrationssensor, eine Temperaturerfassungsschaltung, eine Feuchtigkeitserfassungsschaltung, einen Temperatursensor, einen Feuchtigkeitssensor, einen Ton- und Lichtalarm und ein drahtloses Kommunikationsmodul umfasst. Der Kontroller, die Vibrationsinformationssammelschaltung, die Temperaturerfassungsschaltung, die Feuchtigkeitserfassungsschaltung, der Ton- und Lichtalarm, das Kommunikationsmodul und eine Kontrollschaltung auf einer Leiterplatte sind verbunden. Gegenüber dem Stand der Technik hat der Lithiumbatteriepack die Vorteile, dass die Umgebung überwacht werden kann, in welcher der Lithiumbatteriepack lokalisiert ist. Wenn der Lithiumbatteriepack Probleme mit Kollision, Überhitzung, Wasser und dergleichen hat, können der Selbstschutz-Stromausfall und die Fernwarnung ausgelöst werden.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, wobei der Akkupack verbesserte Eigenschaften aufweist, insbesondere eine relativ lange Lebensdauer hat, und eines Bearbeitungssystems aufweisend einen solchen Akkupack und ein elektrisch angetriebenes Bearbeitungsgerät zugrunde.

Die Erfindung löst die Aufgabe durch die Bereitstellung eines Akkupacks mit den Merkmalen des Anspruchs 1 und eines Bearbeitungssystems mit den Merkmalen des Anspruchs 13. Vorteilhafte Weiterbildungen und/oder Ausgestaltungen der Erfindung sind in den abhängigen Ansprüchen beschrieben.

Der erfindungsgemäße Akkupack ist zur, insbesondere automatischen, Versorgung eines elektrisch angetriebenen Bearbeitungsgeräts, insbesondere Garten-, Forst- und/oder Baubearbeitungsgeräts, mit elektrischer Antriebsleistung ausgebildet bzw. konfiguriert. Der Akkupack weist eine Stapelbegrenzungsstruktur, mehrere Pouchzellen, einen, insbesondere elektrischen, äußeren Temperatursensor und eine, insbesondere elektrische, Steuerungseinrichtung auf. Die Pouchzellen sind in einem Stapel, insbesondere auf- bzw. übereinander, angeordnet. Der Stapel ist innerhalb der Stapelbegrenzungsstruktur angeordnet. Der äußere Temperatursensor ist zur, insbesondere automatischen, Messung einer äußeren Temperatur, insbesondere eines Werts der Temperatur, des Stapels außerhalb des Stapels an einem Rand bzw. einer Kante des Stapels oder der Stapelbegrenzungsstruktur und/oder außerhalb der Stapelbegrenzungsstruktur angeordnet und ausgebildet bzw. konfiguriert. Die Steuerungseinrichtung ist zum, insbesondere automatischen, Vergleich der gemessenen äußeren Temperatur und/oder einer auf der gemessenen äußeren Temperatur basierenden Größe mit mindestens einer Temperaturvergleichsgröße ausgebildet bzw. konfiguriert. Die mindestens eine Temperaturvergleichsgröße ist von mindestens einer der Pouchzellen abhängig, insbesondere vorgegeben. Des Weiteren ist die Steuerungseinrichtung zur, insbesondere automatischen, Steuerung des Akkupacks in Abhängigkeit von einem Ergebnis des Vergleichs ausgebildet bzw. konfiguriert. Außerdem ist die Steuerungseinrichtung zur, insbesondere automatischen, Steuerung, insbesondere Beendigung, der Abgabe der elektrischen Antriebsleistung und/oder einer, insbesondere der, Aufnahme einer, insbesondere der, elektrischen Ladeleistung ausgebildet bzw. konfiguriert. Des Weiteren ist die Steuerungseinrichtung, insbesondere vollständig und/oder nur, auf einer Seite des Stapels, insbesondere an dem Stapel, angeordnet. Der äußere Temperatursensor ist, insbesondere vollständig und/oder nur, auf einer abgewandten Seite des Stapels, insbesondere an einem maximal entfernten Rand des Stapels oder der Stapelbegrenzungsstruktur, angeordnet.

Die Anordnung des äußeren Temperatursensors ermöglicht die Messung an einer Stelle, an welcher die äußere Temperatur des Stapels am niedrigsten bzw. kältesten, z.B. im Winter, oder am höchsten bzw. heißesten, z.B. im Sommer, sein kann, insbesondere zeitlich vor einem Entladen oder einem Aufladen des Akkupacks, insbesondere der Pouchzellen. Des Weiteren ermöglicht dies die Messung der äußeren Temperatur an einer Stelle, an welcher die äußere Temperatur des Stapels durch die Steuerungseinrichtung, insbesondere eine Wärme der Steuerungseinrichtung, kaum oder nicht beeinflusst sein kann.

Die Steuerungseinrichtung ermöglicht einen Schutz der Pouchzellen und somit des Akkupacks vor Schäden durch Entladen oder Aufladen bei Unterkühlung und/oder Überhitzung der Pouchzellen.

Dies ermöglicht sicherheitskritische Zustände der Pouchzellen und somit des Akkupacks gering zu halten oder sogar ganz zu vermeiden.

Dies ermöglicht eine relativ lange Lebensdauer der Pouchzellen und somit des Akkupacks.

Insbesondere können die Pouchzellen zur Versorgung des Bearbeitungsgeräts mit der Antriebsleistung ausgebildet sein. Zusätzlich oder alternativ können die Pouchzellen Akkumulatorzellen bzw. jeweils einzelne wiederaufladbare Speicherelemente für elektrische Energie auf elektrochemischer Basis sein. Insbesondere können die Pouchzellen Lithium-Ionen-Akkumulatorzellen sein. Weiter zusätzlich oder alternativ können die Pouchzellen elektrisch zusammengeschaltet sein, insbesondere seriell oder parallel geschaltet sein. Weiter zusätzlich oder alternativ können die Pouchzellen Flachzellen sein. Weiter zusätzlich oder alternativ kann die Fläche der Pouchzellen rechteckig sein. Weiter zusätzlich oder alternativ können die Pouchzellen gleich, insbesondere typ- und/oder baugleich, sein. Weiter zusätzlich oder alternativ kann der Stapel quaderförmig sein. Die Pouchzellen können in dem Stapel mit einer jeweiligen Hauptebene parallel zueinander und/oder orthogonal zu einer Stapelrichtung angeordnet sein.

Der äußere Temperatursensor kann an einer Ecke des Stapels oder der Stapelbegrenzungsstruktur angeordnet sein. Zusätzlich oder alternativ kann an einem Rand oder einer Ecke dem Rand oder der Ecke näher als einer Mitte bedeuten, insbesondere maximal 20 Millimeter (mm), insbesondere maximal 10 mm, insbesondere maximal 5 mm, zu dem Rand oder der Ecke beabstandet. Weiter zusätzlich oder alternativ kann der äußere Temperatursensor eine thermische Verbindung mit dem Stapel, insbesondere den Pouchzellen, aufweisen. Weiter zusätzlich oder alternativ kann der äußere Temperatursensor maximal 20 Millimeter (mm), insbesondere maximal 10 mm, insbesondere maximal 5 mm zu dem Stapel, insbesondere den Pouchzellen, beabstandet angeordnet sein. Insbesondere kann der äußere Temperatursensor die Stapelbegrenzungsstruktur und/oder den Stapel, insbesondere die Pouchzellen, berühren. Weiter zusätzlich oder alternativ kann der äußere Temperatursensor ein Heißleiter (Englisch: Negative temperature coefficient thermistor) sein.

Die mindestens eine Temperaturvergleichsgröße kann von einer Elektrochemie der Pouchzellen abhängig, insbesondere vorgegeben, sein. Zusätzlich oder alternativ kann die mindestens eine Temperaturvergleichsgröße mindestens ein äußerer Temperaturgrenzwert sein.

Die Steuerungseinrichtung kann zur Steuerung, insbesondere Beendigung, der Abgabe der elektrischen Antriebsleistung von dem Akkupack und/oder einer Aufnahme einer elektrischen Ladeleistung durch den Akkupack ausgebildet sein, insbesondere bei Unterschreitung, Erreichung oder Überschreitung der mindestens einen Temperaturvergleichsgröße, insbesondere des mindestens einen äußeren Temperaturgrenzwerts, durch die gemessene äußere Temperatur und/oder die auf der gemessenen äußeren Temperatur basierende Größe.

Insbesondere kann die Steuerungseinrichtung außerhalb der Stapelbegrenzungsstruktur angeordnet sein.

In einer Weiterbildung der Erfindung ist der äußere Temperatursensor an einem Rand, insbesondere einer Ecke, einer äußersten der Pouchzellen angeordnet.

Zusätzlich oder alternativ ist die mindestens eine Temperaturvergleichsgröße von einer, insbesondere der, äußersten der Pouchzellen abhängig, insbesondere vorgegeben.

Insbesondere kann die äußerste der Pouchzellen ganz oben in dem Stapel bzw. an einer Oberseite des Stapels oder ganz unten in dem Stapel bzw. an einer Unterseite des Stapels angeordnet sein, insbesondere in der Stapelrichtung.

In einer Weiterbildung der Erfindung ist die Stapelbegrenzungsstruktur ein, insbesondere massives, Stapelgehäuse. Dies ermöglicht bei einem Platzen der Pouchzellen eine mechanische Belastung umliegender Teile gering zu halten oder sogar ganz zu vermeiden. Insbesondere kann das Stapelgehäuse quaderförmig sein. Zusätzlich oder alternativ kann das Stapelgehäuse teilweise oder sogar vollständig aus Aluminium bestehen.

In einer Weiterbildung der Erfindung weist der Akkupack einen, insbesondere elektrischen, inneren Temperatursensor auf. Der innere Temperatursensor ist zur, insbesondere automatischen, Messung einer inneren Temperatur, insbesondere eines Werts der Temperatur, des Stapels in dem Stapel, insbesondere zwischen zwei, insbesondere in der Stapelrichtung, mittigen der Pouchzellen und/oder in einer Mitte einer Fläche der Pouchzellen, angeordnet und ausgebildet bzw. konfiguriert. Die Steuerungseinrichtung ist zum, insbesondere automatischen, Vergleich der gemessenen inneren Temperatur und/oder einer auf der gemessenen inneren Temperatur basierenden Größe mit mindestens einer, insbesondere weiteren, Temperaturvergleichsgröße ausgebildet bzw. konfiguriert. Die mindestens eine Temperaturvergleichsgröße ist von mindestens einer, insbesondere mittigen, der Pouchzellen abhängig, insbesondere vorgegeben. Des Weiteren ist die Steuerungseinrichtung zur, insbesondere automatischen, Steuerung des Akkupacks in Abhängigkeit von einem Ergebnis des Vergleichs ausgebildet bzw. konfiguriert. Die Anordnung des inneren Temperatursensors ermöglicht die Messung an einer Stelle, an welcher die innere Temperatur des Stapels am niedrigsten bzw. kältesten, z.B. im Sommer, oder am höchsten bzw. heißesten, z.B. im Winter, sein kann, insbesondere zeitlich vor einem Entladen oder einem Aufladen des Akkupacks, insbesondere der Pouchzellen. Insbesondere kann der innere Temperatursensor von dem äußeren Temperatursensor verschieden sein. Zusätzlich oder alternativ kann der innere Temperatursensor ein Heißleiter (Englisch: Negative temperature coefficient thermistor) sein. Weiter zusätzlich oder alternativ kann in einer Mitte der Mitte näher als einem Rand bedeuten, insbesondere maximal 20 mm, insbesondere maximal 10 mm, insbesondere maximal 5 mm, zu der Mitte beabstandet. Weiter zusätzlich oder alternativ kann die mindestens eine, insbesondere weitere, Temperaturvergleichsgröße mindestens ein innerer Temperaturgrenzwert sein. Weiter zusätzlich oder alternativ kann die Größe auf der gemessenen äußeren Temperatur und der gemessenen innere Temperatur basieren, insbesondere eine Differenz der gemessenen inneren Temperatur und der gemessenen äußeren Temperatur sein. Die mindestens eine Temperaturvergleichsgröße kann eine Differenztemperaturvergleichsgröße, insbesondere eine Differenztemperaturwert, sein. Weiter zusätzlich oder alternativ kann die Steuerungseinrichtung zur Steuerung, insbesondere Beendigung, der Abgabe der elektrischen Antriebsleistung von dem Akkupack und/oder der Aufnahme der elektrischen Ladeleistung durch den Akkupack bei Unterschreitung, Erreichung oder Überschreitung der mindestens einen Temperaturvergleichsgröße, insbesondere des mindestens einen inneren Temperaturgrenzwerts und/oder des Differenztemperaturwerts, durch die gemessene innere Temperatur und/oder die auf der gemessenen inneren Temperatur basierende Größe ausgebildet sein.

In einer Ausgestaltung der Erfindung weist der Akkupack eine Sensoranordnung auf. Die Sensoranordnung ist in dem Stapel angeordnet. Des Weiteren erstreckt die Sensoranordnung sich über einen Großteil einer, insbesondere der, Fläche der Pouchzellen und ist derart ausgebildet bzw. konfiguriert, dass eine Höhe des Stapels, insbesondere in der Stapelrichtung, über die Erstreckung etwa gleich ist. Außerdem weist die Sensoranordnung den inneren Temperatursensor auf. Großteil der Fläche bedeutet mindestens 70 Prozent (%), insbesondere mindestens 80 %, insbesondere mindestens 90 %, der Fläche. Dies ermöglicht eine, insbesondere nachteilhafte, Einwirkung der Sensoranordnung auf die Pouchzellen, insbesondere flexible Außenhüllen der Pouchzellen, gering zu halten oder sogar ganz zu vermeiden. Insbesondere kann eine, insbesondere lokale, Verformung und somit eine, lokale, Belastung der Pouchzellen gering gehalten oder sogar ganz vermieden werden. Insbesondere kann die Sensoranordnung sich über die komplette Fläche der Pouchzellen erstrecken. Weiter zusätzlich oder alternativ kann die Sensoranordnung über die Erstreckung Lücken aufweisen. Weiter zusätzlich oder alternativ kann die Höhe durch die Stapelbegrenzungsstruktur begrenzt sein. Weiter zusätzlich oder alternativ kann etwa gleich eine Abweichung von maximal 5 %, insbesondere von maximal 2 %, insbesondere von maximal 1 %, bedeuten. Weiter zusätzlich oder alternativ kann die Höhe über die Erstreckung gleich bzw. homogen sein. Weiter zusätzlich oder alternativ kann die Sensoranordnung zwischen zwei der Pouchzellen angeordnet und derart ausgebildet sein, dass ein Abstand zwischen den zwei Pouchzellen über die Erstreckung etwa gleich sein kann. Weiter zusätzlich oder alternativ kann die Sensoranordnung eine, insbesondere etwa, gleiche, insbesondere konstante, Anordnungsdicke, insbesondere in der Stapelrichtung, über die Erstreckung aufweisen. Weiter zusätzlich oder alternativ kann die Sensoranordnung rechteckig sein.

In einer Ausgestaltung der Erfindung weist die Sensoranordnung einen, insbesondere elektrischen, Drucksensor auf. Der Drucksensor ist zur, insbesondere automatischen, Erfassung, insbesondere Messung, einer Druckkraft, insbesondere in der Stapelrichtung, wirkend auf die Pouchzellen ausgebildet bzw. konfiguriert. Die Steuerungseinrichtung ist zum, insbesondere automatischen, Vergleich der erfassten, insbesondere gemessenen, Druckkraft und/oder einer auf der erfassten Druckkraft basierenden Größe mit einem Druckgrenzwert ausgebildet bzw. konfiguriert. Der Druckgrenzwert ist von mindestens einer der Pouchzellen vorgegeben. Des Weiteren ist die Steuerungseinrichtung zur, insbesondere automatischen, Steuerung des Akkupacks in Abhängigkeit von einem Ergebnis des Vergleichs ausgebildet bzw. konfiguriert. Der Drucksensor ermöglicht ein Aufblähen, soweit vorhanden, der Pouchzellen, insbesondere in der Stapelrichtung, zu erfassen, insbesondere zu messen. Insbesondere kann das Aufblähen zusammen mit der begrenzten Höhe des Stapels einen Aufbau der Druckkraft verursachen. Die Sensoranordnung ermöglicht einen Synergieeffekt. Insbesondere kann der Drucksensor zur Erfassung der Druckkraft orthogonal zu der Fläche und/oder der Hauptebenen wirkend auf die Pouchzellen ausgebildet sein. Zusätzlich oder alternativ kann der Drucksensor zur qualitativen Erfassung der Druckkraft, insbesondere als mechanischer Schalter, oder sogar zur quantitativen Messung der Druckkraft, insbesondere eines Werts der Druckkraft, ausgebildet sein. Weiter zusätzlich oder alternativ kann die Steuerungseinrichtung zur Steuerung, insbesondere Beendigung, der Abgabe der elektrischen Antriebsleistung von dem Akkupack und/oder der Aufnahme der elektrischen Ladeleistung durch den Akkupack bei Erreichung oder Überschreitung des Druckgrenzwerts durch die erfasste, insbesondere gemessene, Druckkraft und/oder die auf der erfassten Druckkraft basierende Größe ausgebildet sein. Weiter zusätzlich oder alternativ kann die Steuerungseinrichtung zur Ermittlung eines Gesundheitszustands (Englisch: State of health) des Akkupacks in Abhängigkeit von der äußeren Temperatur und/oder der inneren Temperatur und/oder der Druckkraft und zur Steuerung des Akkupacks in Abhängigkeit von dem ermittelten Gesundheitszustand ausgebildet sein.

In einer Weiterbildung der Erfindung weist der Akkupack mehrere Akkupackkontakte auf. Die Akkupackkontakte sind zur elektrischen Verbindung des Akkupacks und des Bearbeitungsgeräts miteinander zur Versorgung des Bearbeitungsgeräts mit elektrischer Antriebsleistung von dem Akkupack ausgebildet bzw. konfiguriert. Des Weiteren weist der Akkupack einen Akkupackkontaktträger auf. Der Akkupackkontaktträger trägt die Akkupackkontakte und den äußeren Temperatursensor. Außerdem ist der Akkupackkontaktträger an der Stapelbegrenzungsstruktur angeordnet. Der Akkupackkontaktträger ermöglicht einen Synergieeffekt. Insbesondere können die Akkupackkontakte auf einer der Steuerungseinrichtung gegenüberliegenden Seite des Stapels angeordnet sein.

In einer Weiterbildung der Erfindung weist der Akkupack ein Akkupackgehäuse auf. Die Pouchzellen, und insbesondere die Stapelbegrenzungsstruktur, sind innerhalb des Akkupackgehäuses angeordnet. Des Weiteren weist der Akkupack mindestens einen Luftkühlkreislauf aufweisend eine Anzahl von Lufteinlassöffnungen und eine Anzahl von Luftauslassöffnungen in dem Akkupackgehäuse für eine Kühlluftströmung von der Anzahl von Lufteinlassöffnungen an den Pouchzellen, insbesondere der Stapelbegrenzungsstruktur, vorbei zu der Anzahl von Luftauslassöffnungen zur Kühlung der Pouchzellen auf. Der äußere Temperatursensor ist in dem Luftkühlkreislauf zwischen der Anzahl von Lufteinlassöffnungen und der Anzahl von Luftauslassöffnungen, insbesondere der Anzahl von Lufteinlassöffnungen und/oder der Anzahl von Luftauslassöffnungen zugewandt, angeordnet. Insbesondere kann der äußere Temperatursensor in, insbesondere direktem, Kontakt mit Luft des Luftkühlkreislaufes bzw. der Kühlluftströmung sein.

In einer Weiterbildung der Erfindung weist die Stapelbegrenzungsstruktur eine thermische Verbindung mit den Pouchzellen auf und ist thermisch leitfähig. Dies ermöglicht eine Wärmeableitung von den Pouchzellen nach außen.

In einer Weiterbildung der Erfindung weist der Akkupack mindestens eine thermische Isolierung auf. Die mindestens eine thermische Isolierung ist jeweils zwischen zwei der Pouchzellen angeordnet und erstreckt sich über einen Großteil der Fläche der Pouchzellen. Dies ermöglicht eine Wärmeübertragung von den Pouchzellen untereinander zu reduzieren oder sogar ganz zu vermeiden. Insbesondere kann die mindestens eine thermische Isolierung ein Schaumstoff, insbesondere Moosgummi, aufweisen, insbesondere sein. Zusätzlich oder alternativ kann die mindestens eine thermische Isolierung mindestens ein Pufferelement sein. Das mindestens eine Pufferelement kann dazu ausgebildet sein, über eine Pufferdicke des mindestens einen Pufferelements ein Aufblähen, soweit vorhanden, der Pouchzellen, insbesondere in der Stapelrichtung, zu puffern. Dies kann ermöglichen ein leichtes, insbesondere unkritisches, Aufblähen, soweit vorhanden, der Pouchzellen verursacht durch Alterung aufzunehmen bzw. zu kompensieren.

In einer Weiterbildung der Erfindung weist der Akkupack, insbesondere weisen die Pouchzellen, eine maximale elektrische Antriebsleistung von minimal 1 Kilowatt (kW), insbesondere von minimal 2 kW, und/oder von maximal 10 kW, insbesondere von maximal 5 kW, auf.

Zusätzlich oder alternativ weist der Akkupack, insbesondere weisen die Pouchzellen, eine, insbesondere elektrische, Nennspannung von minimal 10 Volt (V), insbesondere von minimal 20 V, und/oder von maximal 100 V, insbesondere von maximal 50 V, auf.

Zusätzlich oder alternativ weist der Akkupack, insbesondere weisen die Pouchzellen, einen, insbesondere elektrischen, maximalen Energieinhalt von minimal 100 Wattstunden (Wh), insbesondere von minimal 200 Wh, und/oder von maximal 1000 Wh, insbesondere von maximal 500 Wh, auf.

Zusätzlich oder alternativ weist der Akkupack eine Masse von minimal 0,5 Kilogramm (kg), insbesondere von minimal 1 kg, und/oder von maximal 10 kg, insbesondere von maximal 5 kg, auf.

Zusätzlich oder alternativ weist der Akkupack eine Höhe, insbesondere in der Stapelrichtung, von minimal 2,5 Zentimeter (cm) und/oder von maximal 10 cm, und/oder eine Breite von minimal 5 cm und/oder von maximal 20 cm, und/oder eine Tiefe von minimal 7,5 cm und/oder von maximal 30 cm auf.

Das erfindungsgemäße Bearbeitungssystem weist einen, insbesondere den, Akkupack wie zuvor beschrieben und ein, insbesondere das, elektrisch angetriebenes Bearbeitungsgerät auf. Der Akkupack und das Bearbeitungsgerät sind zur elektrischen Verbindung miteinander zur, insbesondere automatischen, Versorgung des Bearbeitungsgeräts mit elektrischer Antriebsleistung von dem Akkupack ausgebildet bzw. konfiguriert.

Insbesondere kann das Bearbeitungssystem ein Garten-, Forst- und/oder Baubearbeitungssystem sein. Zusätzlich oder alternativ kann das Bearbeitungsgerät ein Garten-, Forst- und/oder Baubearbeitungsgerät sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine maximale Masse von 50 Kilogramm (kg), insbesondere von 20 kg, insbesondere von 10 kg, aufweisen kann. Weiter zusätzlich oder alternativ kann das Bearbeitungsgerät einen Elektroantriebsmotor aufweisen.

Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere lösbaren, insbesondere werkzeugfrei und/oder zerstörungsfrei lösbaren, mechanischen Verbindung miteinander ausgebildet sein. Insbesondere kann das Bearbeitungsgerät zum Tragen des Akkupacks ausgebildet sein.

In einer Weiterbildung der Erfindung weist das Bearbeitungsgerät eine Akkuaufnahme, insbesondere einen Akkuschacht, auf. Die Akkuaufnahme ist zum Aufnehmen des Akkupacks ausgebildet bzw. konfiguriert.

In einer Weiterbildung der Erfindung ist das Bearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät in Form einer Säge, eines Trennschleifers und eines Blasgeräts,
- Fig. 2: eine Explosionsansicht des Akkupacks der Fig. 1,
- Fig. 3: eine Perspektivansicht einer ersten Stapelbegrenzungsstruktur des Akkupacks der Fig. 1,
- Fig. 4: eine Perspektivansicht der ersten Stapelbegrenzungsstruktur, von Pouchzellen und einer Sensoranordnung des Akkupacks der Fig. 1,
- Fig. 5: eine Perspektivansicht der ersten Stapelbegrenzungsstruktur, von Pouchzellen und der Sensoranordnung angeordnet in einem Stapel des Akkupacks der Fig. 1,
- Fig. 6: eine Perspektivansicht der ersten Stapelbegrenzungsstruktur, des Stapels und einer zweiten Stapelbegrenzungsstruktur des Akkupacks der Fig. 1,
- Fig. 7: eine Perspektivansicht der ersten Stapelbegrenzungsstruktur, des Stapels, der zweiten Stapelbegrenzungsstruktur und eines Teils einer Steuerungseinrichtung des Akkupacks der Fig. 1,
- Fig. 8: eine Perspektivansicht der ersten Stapelbegrenzungsstruktur, des Stapels, der zweiten Stapelbegrenzungsstruktur und der Steuerungseinrichtung des Akkupacks der Fig. 1,
- Fig. 9: eine Perspektivansicht von einer Rückseite der ersten Stapelbegrenzungsstruktur, des Stapels, der zweiten Stapelbegrenzungsstruktur, der Steuerungseinrichtung und eines äußeren Temperatursensors des Akkupacks der Fig. 1,
- Fig. 10: eine Perspektivansicht des äußeren Temperatursensors und eines Akkupackkontaktträgers des Akkupacks der Fig. 1,
- Fig. 11: eine Perspektivansicht eines Akkupackgehäuses des Akkupacks der Fig. 1, und
- Fig. 12: eine alternative Sensoranordnung des Akkupacks der Fig. 1.

### DETAILLIERTE BESCHREIBUNG DER AUSFÜHRUNGSBEISPIELE

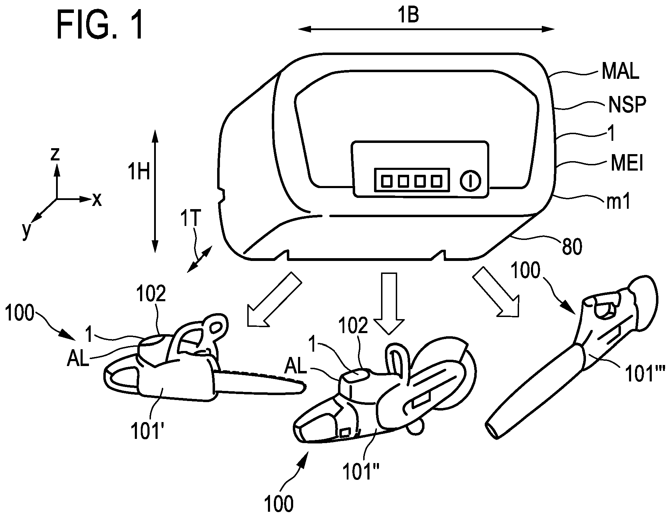

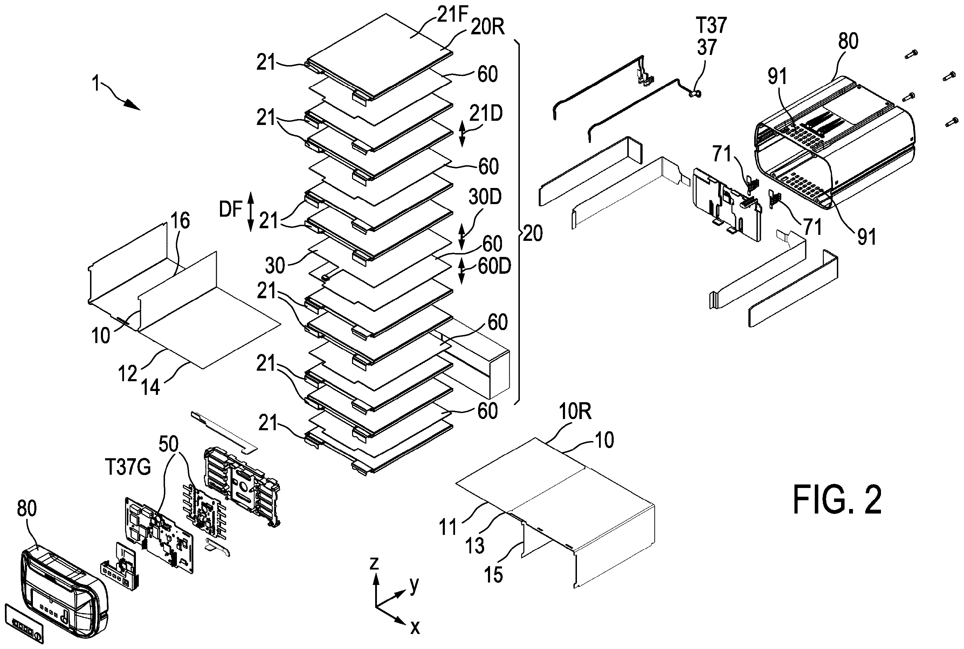

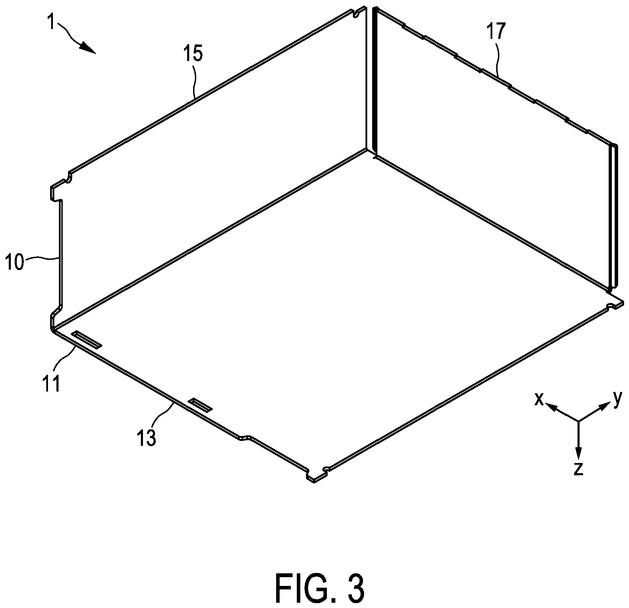

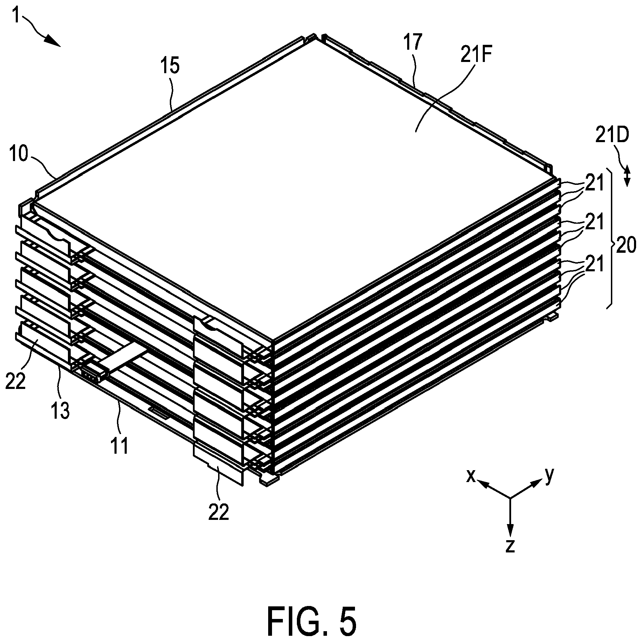

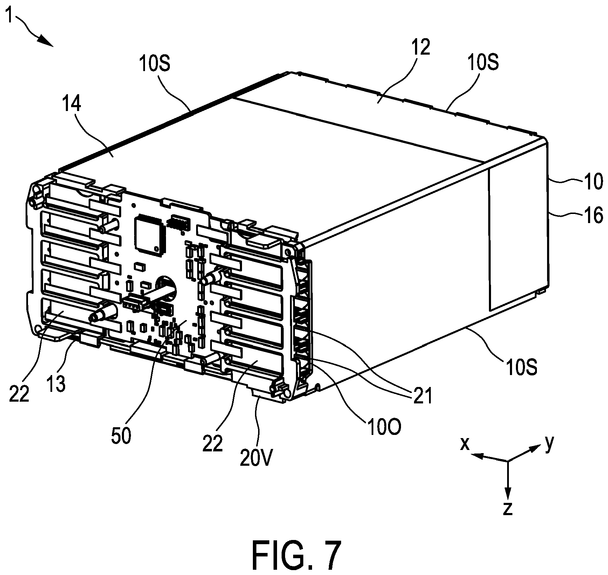

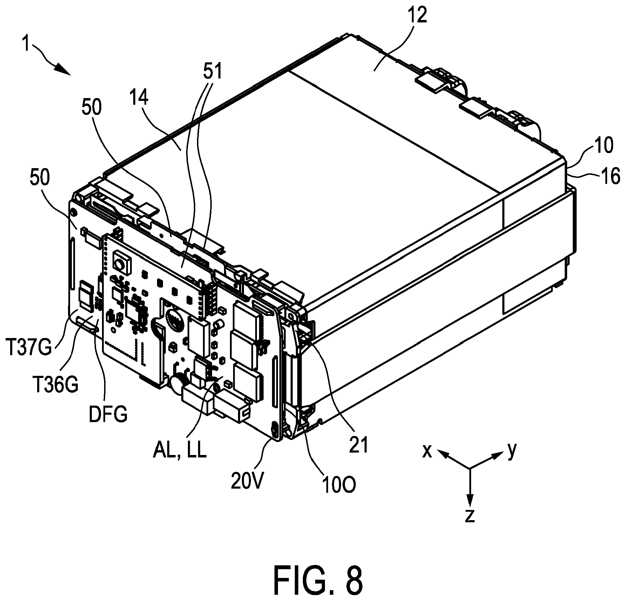

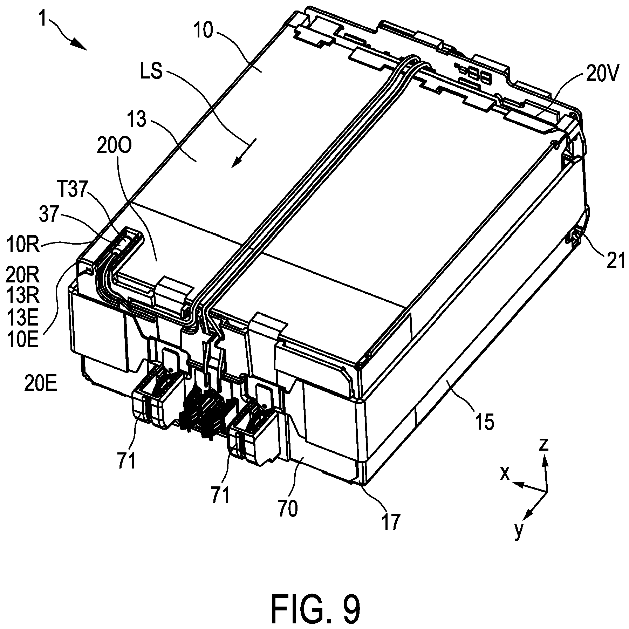

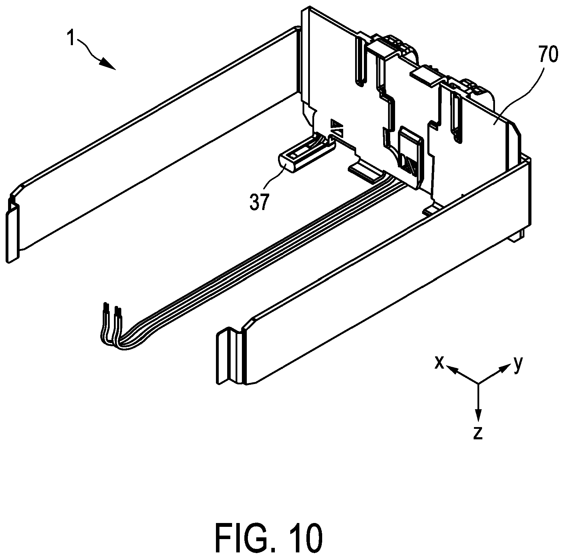

Fig. 1 bis 12 zeigen einen erfindungsgemäßen Akkupack 1 zur Versorgung eines elektrisch angetriebenen Bearbeitungsgeräts 101 mit elektrischer Antriebsleistung AL. Der Akkupack weist eine Stapelbegrenzungsstruktur 10, mehrere Pouchzellen 21, einen äußeren Temperatursensor 37 und eine Steuerungseinrichtung 50 auf. Die Pouchzellen 21 sind in einem Stapel 20 angeordnet, wie in Fig. 5 gezeigt. Der Stapel 20 ist innerhalb der Stapelbegrenzungsstruktur 10 angeordnet. Der äußere Temperatursensor 37 ist zur Messung einer äußeren Temperatur T37 des Stapels 20 außerhalb des Stapels 30 an einem Rand 20R, 10R, insbesondere einer Ecke 20E, 10E, des Stapels 20 oder der Stapelbegrenzungsstruktur 10 und/oder außerhalb der Stapelbegrenzungsstruktur 10 angeordnet und ausgebildet, wie in Fig. 9 und 10 gezeigt. Die Steuerungseinrichtung 50 ist zum Vergleich der gemessenen äußeren Temperatur T37 und/oder einer auf der gemessenen äußeren Temperatur T37 basierenden Größe mit mindestens einer Temperaturvergleichsgröße T37G ausgebildet, wie in Fig. 7 und 8 gezeigt. Die mindestens eine Temperaturvergleichsgröße T37G ist von mindestens einer der Pouchzellen 21 abhängig, insbesondere vorgegeben. Des Weiteren ist die Steuerungseinrichtung 50 zur Steuerung des Akkupacks 1 in Abhängigkeit von einem Ergebnis des Vergleichs ausgebildet.

Im gezeigten Ausführungsbeispiel weist der Akkupack 1 zehn Pouchzellen 21 auf. In alternativen Ausführungsbeispielen kann der Akkupack mindestens zwei Pouchzellen aufweisen.

Außerdem erstrecken im gezeigten Ausführungsbeispiel die Pouchzellen 21 sich jeweils in zu einer Stapelrichtung z orthogonalen Richtungen x, y.

Weiter weist im gezeigten Ausführungsbeispiel der äußere Temperatursensor 37 eine thermische Verbindung mit dem Stapel 20, insbesondere den Pouchzellen 21, auf. Insbesondere berührt der äußere Temperatursensor 37 die Stapelbegrenzungsstruktur 10.

Zudem ist im gezeigten Ausführungsbeispiel die Steuerungseinrichtung 50 mit dem äußeren Temperatursensor 37 elektrisch verbunden.

Des Weiteren weist im gezeigten Ausführungsbeispiel die Steuerungseinrichtung 50 mindestens eine Leiterplatte auf.

Außerdem ist der äußere Temperatursensor an einem Rand 20R, insbesondere einer Ecke 20E, einer äußersten, insbesondere obersten, der Pouchzellen 21 angeordnet.

Zusätzlich oder alternativ ist die mindestens eine Temperaturvergleichsgröße T37G von der äußersten der Pouchzellen 21 abhängig, insbesondere vorgegeben.

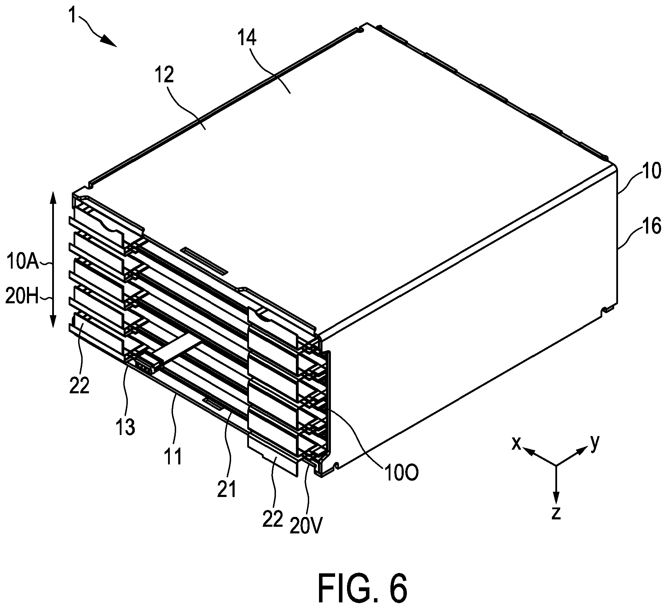

Weiter ist die Stapelbegrenzungsstruktur 10 ein, insbesondere massives, Stapelgehäuse, wie in Fig. 6 gezeigt.

Im gezeigten Ausführungsbeispiel weist die Stapelbegrenzungsstruktur bzw. das Stapelgehäuse 10 ein erstes Gehäuseteil 11 und ein zweites Gehäuseteil 12 auf. Der Stapel 20 ist zwischen dem ersten Gehäuseteil 11 und dem zweiten Gehäuseteil 12 angeordnet. Das erste Gehäuseteil 11 und das zweite Gehäuseteil 12 sind durch mindestens eine stoffschlüssige Verbindung 10S, insbesondere eine Schweißverbindung, miteinander mechanisch verbunden.

Insbesondere weist im gezeigten Ausführungsbeispiel die Stapelbegrenzungsstruktur bzw. das Stapelgehäuse 10 fünf Gehäusewände 13, 14, 15, 16, 17 auf. Das erste Gehäuseteil 11 weist die erste Gehäusewand bzw. Oberseitenwand 13, die Gehäusewand, insbesondere Umfangsseitenwand, 15 und die Gehäusewand, insbesondere die Rückseitenwand, 17 auf. Das zweite Gehäuseteil 12 weist die zweite Gehäusewand bzw. Unterseitenwand 14 und die Gehäusewand, insbesondere Umfangsseitenwand, 16 auf.

Zudem ist im gezeigten Ausführungsbeispiel eine Höhe 20H des Stapels 20, insbesondere in der Stapelrichtung z, durch die Stapelbegrenzungsstruktur bzw. das Stapelgehäuse 10 begrenzt.

Insbesondere ist eine zweite Stapelbegrenzungsstruktur bzw. die zweite Gehäusewand 14 zu der ersten Stapelbegrenzungsstruktur bzw. der ersten Gehäusewand 13 mit einem festen Abstand 10A gegenüberliegend angeordnet. Der Stapel 20 ist zwischen der ersten Stapelbegrenzungsstruktur bzw. Gehäusewand 13 und der zweiten Stapelbegrenzungsstruktur bzw. Gehäusewand 14 angeordnet. Die Höhe 20H des Stapels 20, insbesondere in der Stapelrichtung z, ist durch die erste Stapelbegrenzungsstruktur bzw. Gehäusewand 13 und die zweite Stapelbegrenzungsstruktur bzw. Gehäusewand 14, insbesondere ihren festen Abstand 10A, begrenzt.

Des Weiteren erstrecken im gezeigten Ausführungsbeispiel die erste Stapelbegrenzungsstruktur bzw. Gehäusewand 13 und die zweite Stapelbegrenzungsstruktur bzw. Gehäusewand 14 sich jeweils in den zu der Stapelrichtung z orthogonalen Richtungen x, y. In anderen Worten: die zweite Stapelbegrenzungsstruktur bzw. Gehäusewand 14 ist , insbesondere mit einer Hauptebene, parallel zu der ersten Stapelbegrenzungsstruktur bzw. Gehäusewand 13, insbesondere einer Hauptebene der ersten Stapelbegrenzungsstruktur bzw. Gehäusewand 13, angeordnet. Außerdem ist im gezeigten Ausführungsbeispiel der Abstand 10A in der Stapelrichtung z. Weiter gleicht im gezeigten Ausführungsbeispiel die Höhe 20H dem Abstand 10A.

Zudem ist im gezeigten Ausführungsbeispiel der äußere Temperatursensor 37 an einem Rand 13R, insbesondere einer Ecke 13E, der ersten Stapelbegrenzungsstruktur bzw. Gehäusewand 13 angeordnet.

In alternativen Ausführungsbeispielen kann der äußere Temperatursensor an einem Rand, insbesondere einer Ecke, der zweiten Stapelbegrenzungsstruktur bzw. Gehäusewand angeordnet sein.

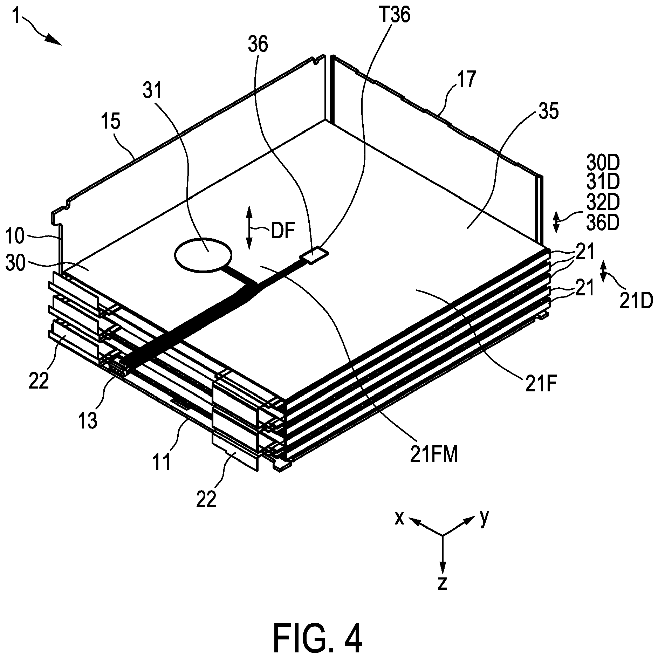

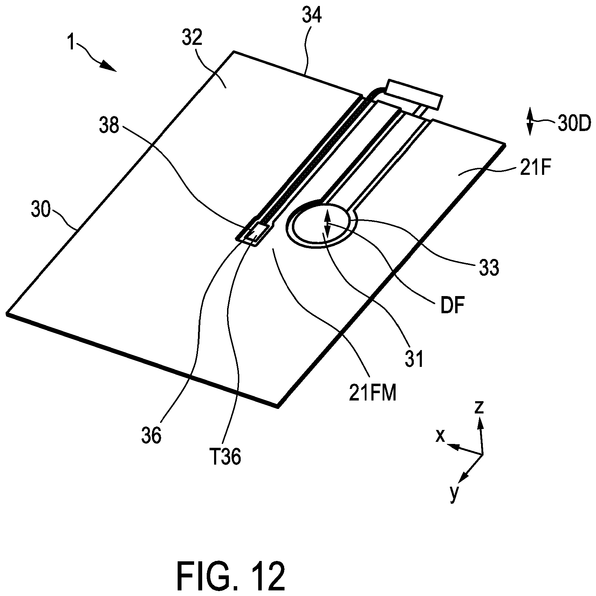

Des Weiteren weist der Akkupack 1 einen inneren Temperatursensor 36 auf, wie in Fig. 4 und 12 gezeigt. Der innere Temperatursensor 36 ist zur Messung einer inneren Temperatur T36 des Stapels 20 in dem Stapel 20, insbesondere zwischen zwei, insbesondere in der Stapelrichtung z, mittigen der Pouchzellen 21 und/oder in einer Mitte 21 FM einer Fläche 21F der Pouchzellen 21, angeordnet und ausgebildet. Die Steuerungseinrichtung 50 ist zum Vergleich der gemessenen inneren Temperatur T36 und/oder einer auf der gemessenen inneren Temperatur T36 basierenden Größe mit mindestens einer, insbesondere weiteren, Temperaturvergleichsgröße T36G ausgebildet. Die mindestens eine Temperaturvergleichsgröße T36G ist von mindestens einer, insbesondere mittigen, der Pouchzellen 21 abhängig, insbesondere vorgegeben. Außerdem ist die Steuerungseinrichtung 50 zur Steuerung des Akkupacks 1 in Abhängigkeit von einem Ergebnis des Vergleichs ausgebildet.

In anderen Worten: der innere Temperatursensor 36 ist an einem Schnittpunkt von Diagonalen des Stapels 20 angeordnet.

Im gezeigten Ausführungsbeispiel ist die Größe eine Differenz der gemessenen inneren Temperatur T36 und der gemessenen äußeren Temperatur T37. Die mindestens eine Temperaturvergleichsgröße ist ein äußerer Temperaturgrenzwert T37G, ein innerer Temperaturgrenzwert T36G und ein Differenztemperaturwert. In alternativen Ausführungsbeispielen kann die mindestens eine Temperaturvergleichsgröße der äußere Temperaturgrenzwert, der innere Temperaturgrenzwert und/oder eine Differenztemperaturvergleichsgröße, insbesondere der Differenztemperaturwert, sein.

Weiter ist im gezeigten Ausführungsbeispiel die Steuerungseinrichtung 50 mit dem inneren Temperatursensor 36 elektrisch verbunden.

Zudem weist der Akkupack 1 eine Sensoranordnung 30 auf. Die Sensoranordnung 30 ist in dem Stapel 20 angeordnet. Des Weiteren erstreckt die Sensoranordnung 30 sich über einen Großteil der Fläche 21F der Pouchzellen 21 und ist derart ausgebildet, dass die Höhe 20H des Stapels 20, insbesondere in der Stapelrichtung z, über die Erstreckung etwa gleich ist. Außerdem weist die Sensoranordnung 30 den inneren Temperatursensor 36 auf.

Im gezeigten Ausführungsbeispiel erstreckt die Sensoranordnung 30 sich in den zu der Stapelrichtung z orthogonalen Richtungen x, y. Weiter erstreckt im gezeigten Ausführungsbeispiel die Sensoranordnung 30 sich über die komplette Fläche 21F der Pouchzellen 21. Zudem weist im gezeigten Ausführungsbeispiel die Sensoranordnung 30 eine gleiche Anordnungsdicke 30D, insbesondere in der Stapelrichtung z, über die Erstreckung auf.

In Fig. 1 bis 11 ist die Sensoranordnung 30 einstückig ausgebildet.

In Fig. 12 weist die Sensoranordnung 30 einen Ausgleichsabstandshalter 32 auf. Der Ausgleichsabstandshalter 32 ist in dem Stapel 20 angeordnet. Des Weiteren ist der Ausgleichsabstandshalter 32 getrennt von dem inneren Temperatursensor 36 ausgebildet. Außerdem weist der Ausgleichsabstandshalter 32 mindestens eine Sensoraussparung 33, 38 auf. Der innere Temperatursensor 36 ist in der Sensoraussparung 38 angeordnet. Eine Abstandshalterdicke 32D des Ausgleichsabstandshalters 32 und eine Sensordicke 36D des inneren Temperatursensors 36, insbesondere in der Stapelrichtung z, sind etwa gleich.

Weiter ist in Fig. 1 bis 11 die Sensoranordnung 30 eine Folie 35. In Fig. 12 weist die Sensoranordnung 30 eine Folie 34 auf, insbesondere ist der Ausgleichsabstandshalter 32 die Folie 34.

Des Weiteren weist die Sensoranordnung 30 einen Drucksensor 31 auf. Der Drucksensor 31 ist zur Erfassung, insbesondere Messung, einer Druckkraft DF, insbesondere in der Stapelrichtung z, wirkend auf die Pouchzellen 21 ausgebildet. Die Steuerungseinrichtung 50 ist zum Vergleich der erfassten, insbesondere gemessenen, Druckkraft DF und/oder einer auf der erfassten Druckkraft DF basierenden Größe mit einem Druckgrenzwert DFG ausgebildet. Der Druckgrenzwert DFG ist von mindestens einer der Pouchzellen 21 vorgegeben. Außerdem ist die Steuerungseinrichtung 50 zur Steuerung des Akkupacks 1 in Abhängigkeit von einem Ergebnis des Vergleichs ausgebildet.

In Fig. 12 ist der Drucksensor 31 in der Sensoraussparung 33 angeordnet. Eine Sensordicke 31D des Drucksensors 31 ist etwa gleich der Abstandshalterdicke 32D des Ausgleichsabstandshalters 32 und der Sensordicke 36D des inneren Temperatursensor 36, insbesondere in der Stapelrichtung z.

Weiter ist im gezeigten Ausführungsbeispiel der Drucksensor 31 in der Mitte 21FM der Fläche 21F der Pouchzellen 21 angeordnet.

Zudem ist im gezeigten Ausführungsbeispiel die Steuerungseinrichtung 50 mit dem Drucksensor 31 elektrisch verbunden.

Des Weiteren ist im gezeigten Ausführungsbeispiel die Steuerungseinrichtung 50 zur Messung von Spannungen der Pouchzellen 21 ausgebildet und zur Steuerung des Akkupacks 1 in Abhängigkeit von den gemessenen Spannungen ausgebildet. Insbesondere ist die Steuerungseinrichtung 50 mit den Pouchzellen 21, insbesondere Zelltabs 22 der Pouchzellen 21, elektrisch verbunden.

Außerdem weist im gezeigten Ausführungsbeispiel der Akkupack 1 eine Leistungsabgabe- und/oder Leistungsaufnahmeerfassungseinrichtung 51 auf. Die Leistungsabgabe- und/oder Leistungsaufnahmeerfassungseinrichtung 51 ist zur Erfassung der abgegebenen elektrischen Antriebsleistung AL von dem Akkupack 1 und/oder der aufgenommenen elektrischen Ladeleistung LL durch den Akkupack 1 über der Zeit t ausgebildet. Die Steuerungseinrichtung 50 ist zur Veränderung, insbesondere Erhöhung, des Druckgrenzwerts DFG in Abhängigkeit von der erfassten abgegebenen Antriebsleistung AL und/oder der erfassten aufgenommenen Ladeleistung LL über der Zeit t ausgebildet.

Weiter ist die Steuerungseinrichtung 50 zur Steuerung, insbesondere Beendigung, der Abgabe der elektrischen Antriebsleistung AL und/oder der Aufnahme der elektrischen Ladeleistung LL ausgebildet. Zudem ist die Steuerungseinrichtung 50 auf einer Seite 20V, insbesondere Vorderseite, des Stapels 20, insbesondere an dem Stapel 20, angeordnet. Der äußere Temperatursensor 37 ist auf einer abgewandten Seite 200, insbesondere Oberseite, des Stapels 20, insbesondere an einem maximal entfernten Rand 20R, 10R des Stapels 20 oder der Stapelbegrenzungsstruktur 10 angeordnet.

Des Weiteren weist der Akkupack 1 mehrere Akkupackkontakte 71 auf. Die Akkupackkontakte 71 sind zur elektrischen Verbindung des Akkupacks 1 und des Bearbeitungsgeräts 101 miteinander zur Versorgung des Bearbeitungsgeräts 101 mit elektrischer Antriebsleistung AL von dem Akkupack 1 ausgebildet. Außerdem weist der Akkupack 1 einen Akkupackkontaktträger 70 auf. Der Akkupackkontaktträger 70 trägt die Akkupackkontakte 71 und den äußeren Temperatursensor 37. Weiter ist der Akkupackkontaktträger 70 an der Stapelbegrenzungsstruktur 10 angeordnet.

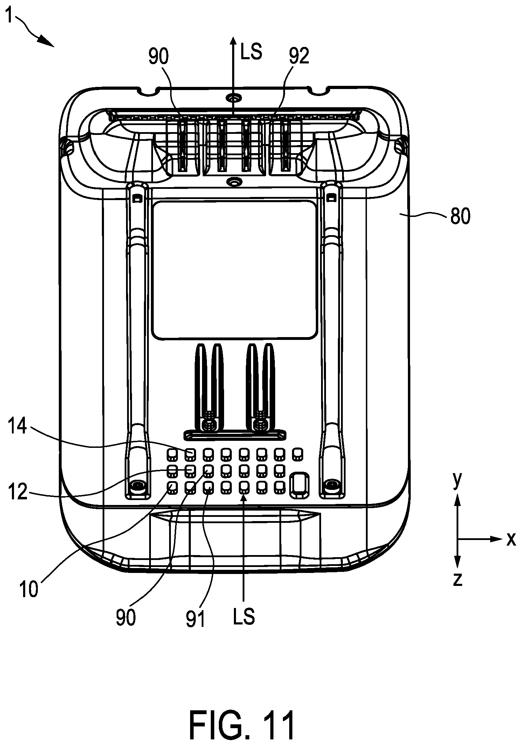

Zudem weist der Akkupack 1 ein Akkupackgehäuse 80 auf, wie in Fig. 11 gezeigt. Die Pouchzellen 21, und insbesondere die Stapelbegrenzungsstruktur 10, der äußere Temperatursensor 37, der innere Temperatursensor 36, der Drucksensor 31, die Steuerungseinrichtung 50, die Leistungsabgabe- und/oder Leistungsaufnahmeerfassungseinrichtung 51 und der Akkupackkontaktträger 70, sind innerhalb des Akkupackgehäuses 80 angeordnet. Des Weiteren weist der Akkupack 1 mindestens einen Luftkühlkreislauf 90 aufweisend eine Anzahl von Lufteinlassöffnungen 91 und eine Anzahl von Luftauslassöffnungen 92 in dem Akkupackgehäuse 80 für eine Kühlluftströmung LS von der Anzahl von Lufteinlassöffnungen 91 an den Pouchzellen 21, insbesondere der Stapelbegrenzungsstruktur 10, vorbei zu der Anzahl von Luftauslassöffnungen 92 zur Kühlung der Pouchzellen 21 auf. Der äußere Temperatursensor 37 ist in dem Luftkühlkreislauf 90 zwischen der Anzahl von Lufteinlassöffnungen 91 und der Anzahl von Luftauslassöffnungen 92, insbesondere der Anzahl von Lufteinlassöffnungen 91 und/oder der Anzahl von Luftauslassöffnungen 92 zugewandt, angeordnet.

Wenn die gemessene äußere Temperatur T37 relativ niedrig ist, brauchen die Pouchzellen 21, insbesondere zeitlich vor einem Aufladen, nicht durch die, insbesondere forcierte, Kühlluftströmung LS gekühlt werden, auch wenn die gemessene innere Temperatur T36 relativ hoch sein kann. Dies ermöglicht eine relativ gute Wärmeverteilung der Pouchzellen 21 in dem Stapel 20, insbesondere im Unterschied zur Kühlung.

Zusätzlich oder alternativ ermöglichen die Messung der äußeren Temperatur T37 und der inneren Temperatur T36 und ein Detektieren eines thermischen Widerstandes, insbesondere der Pouchzellen 21 in dem Stapel 20, eine Vorhersage, wann ein Aufladen zeitlich beginnen und/oder enden kann oder wie lange ein Entladen zeitlich bis zu einer Überhitzung der Pouchzellen 21 zeitlich andauern kann.

Außerdem weist die Stapelbegrenzungsstruktur bzw. das Stapelgehäuse 10 eine thermische Verbindung mit den Pouchzellen 21 auf und ist thermisch leitfähig.

Insbesondere berührt die Stapelbegrenzungsstruktur bzw. das Stapelgehäuse 10, insbesondere berühren die Gehäusewände 13, 14, 15, 16, 17, die Pouchzellen 21 und zwischen den Pouchzellen 21 und den Gehäusewänden 15, 16, 17 ist Wärmeleitpaste.

Weiter weist im gezeigten Ausführungsbeispiel die Stapelbegrenzungsstruktur bzw. das Stapelgehäuse 10 eine, insbesondere durch die Gehäusewände 13, 14, 15, 16 definierte, gemeinsame Struktur- bzw. Gehäuseöffnung 10O auf. Die Pouchzellen 21 sind derart ausgebildet und in dem Stapel 20 innerhalb des Stapelgehäuses 10 angeordnet, dass die Zelltabs 22 auf der Vorderseite bzw. gemeinsamen Tabseite 20V des Stapels 20 an der gemeinsamen Struktur- bzw. Gehäuseöffnung 10O angeordnet sind.

Zudem weist der Akkupack 1 mindestens eine thermische Isolierung 60 auf. Die mindestens eine thermische Isolierung 60 ist jeweils zwischen zwei der Pouchzellen 21 angeordnet und erstreckt sich über einen Großteil der Fläche 21F der Pouchzellen 21.

Im gezeigten Ausführungsbeispiel weist der Akkupack 1 fünf thermische Isolierungen 60 auf. In alternativen Ausführungsbeispielen kann der Akkupack nur eine einzige thermische Isolierung aufweisen.

Des Weiteren erstreckt im gezeigten Ausführungsbeispiel die mindestens eine thermische Isolierung 60 sich in den zu der Stapelrichtung z orthogonalen Richtungen x, y. Außerdem erstreckt im gezeigten Ausführungsbeispiel die mindestens eine thermische Isolierung 60 sich über die komplette Fläche 21F der Pouchzellen 21.

Zusätzlich ist im gezeigten Ausführungsbeispiel die mindestens eine thermische Isolierung 60 ein Pufferelement. Das mindestens eine Pufferelement 60 ist dazu ausgebildet, über eine Pufferdicke 60D des mindestens einen Pufferelements 60 ein Aufblähen, soweit vorhanden, der Pouchzellen 21, insbesondere in der Stapelrichtung z, zu puffern.

Insbesondere weist im gezeigten Ausführungsbeispiel das mindestens eine Pufferelement 60, insbesondere zeitlich vor einem Puffern, eine gleiche Pufferdicke 60D, insbesondere in der Stapelrichtung z, über die Erstreckung auf.

Wenn Zelldicken 21D der Pochzellen 21 verursacht durch ein Aufblähen der Pouchzellen 21 zunehmen, das Aufblähen durch das mindestens eine Pufferelement 60 nicht mehr gepuffert werden kann, und die Druckkraft DF sich somit aufbaut, erfasst dies der Drucksensor 31.

Weiter sind im gezeigten Ausführungsbeispiel die Zelltabs 22 und die Steuerungseinrichtung 50 durch, insbesondere wärmeleitfähige, Vergussmasse eingeschlossen. Die Vergussmasse reicht bis zu Außenhüllen der Pouchzellen 21 hin.

Zudem weist im gezeigten Ausführungsbeispiel der Akkupack 1 eine maximale elektrische Antriebsleistung MAL von 3 kW auf. In alternativen Ausführungsbeispielen kann der Akkupack eine maximale elektrische Antriebsleistung von minimal 1 kW und/oder von maximal 10 kW aufweisen.

Zusätzlich weist im gezeigten Ausführungsbeispiel der Akkupack 1 eine Nennspannung NSP von 36 V auf. In alternativen Ausführungsbeispielen kann der Akkupack eine Nennspannung von minimal 10 V und/oder von maximal 100 V aufweisen.

Zusätzlich weist im gezeigten Ausführungsbeispiel der Akkupack 1 einen maximalen Energieinhalt MEI von 337 Wh auf. In alternativen Ausführungsbeispielen kann der Akkupack einen maximalen Energieinhalt von minimal 100 Wh und/oder von maximal 1000 Wh aufweisen.

Zusätzlich weist im gezeigten Ausführungsbeispiel der Akkupack 1 eine Masse m1 von 2 kg auf. In alternativen Ausführungsbeispielen kann der Akkupack eine Masse von minimal 0,5 kg und/oder von maximal 10 kg aufweisen.

Zusätzlich weist im gezeigten Ausführungsbeispiel der Akkupack 1 eine Höhe 1H, insbesondere in der Stapelrichtung z, von 5 cm, eine Breite 1B, insbesondere in der Richtung x, von 10 cm, und eine Tiefe 1T, insbesondere in der Richtung y, von 15 cm auf. In alternativen Ausführungsbeispielen kann der Akkupack eine Höhe von minimal 2,5 cm und/oder von maximal 10 cm, und/oder eine Breite von minimal 5 cm und/oder von maximal 20 cm, und/oder eine Tiefe von minimal 7,5 cm und/oder von maximal 30 cm aufweisen.

Fig. 1 zeigt ein erfindungsgemäßes Bearbeitungssystem 100. Das Bearbeitungssystem 100 weist den Akkupack 1 und ein elektrisch angetriebenes Bearbeitungsgerät 101 auf. Der Akkupack 1 und das Bearbeitungsgerät 101 sind zur elektrischen Verbindung miteinander zur Versorgung des Bearbeitungsgeräts 101 mit elektrischer Antriebsleistung AL von dem Akkupack 1 ausgebildet, insbesondere elektrisch verbunden.

Im Detail weist das Bearbeitungsgerät 101 eine Akkuaufnahme 102 auf. Die Akkuaufnahme 102 ist zum Aufnehmen des Akkupacks 1 ausgebildet. Insbesondere ist der Akkupack 1 aufgenommen.

In Fig. 1 ist das elektrisch angetriebene Bearbeitungsgerät 101 eine Säge101', ein Trennschleifer 101" oder ein Blasgerät 101‴. In alternativen Ausführungsbeispielen kann das Bearbeitungsgerät ein Hoch-Entaster, ein Freischneider, eine Heckenschere, ein Heckenschneider, ein Laubbläser, eine Astschere, ein Kehrgerät, eine Kehrwalze, eine Kehrbürste, ein Rasenmäher, ein Vertikutierer oder eine Grasschere sein.

Wie die gezeigten und oben erläuterten Ausführungsbeispiele deutlich machen, stellt die Erfindung einen Akkupack zur Versorgung eines elektrisch angetriebenen Bearbeitungsgeräts mit elektrischer Antriebsleistung, wobei der Akkupack verbesserte Eigenschaften aufweist, insbesondere eine relativ lange Lebensdauer hat, und ein Bearbeitungssystem aufweisend einen solchen Akkupack und ein elektrisch angetriebenes Bearbeitungsgerät bereit.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- eine Stapelbegrenzungsstruktur (10),
- mehrere Pouchzellen (21), wobei die Pouchzellen (21) in einem Stapel (20) angeordnet sind, wobei der Stapel (20) innerhalb der Stapelbegrenzungsstruktur (10) angeordnet ist,
- einen äußeren Temperatursensor (37), wobei der äußere Temperatursensor (37) zur Messung einer äußeren Temperatur (T37) des Stapels (20) außerhalb des Stapels (20) an einem Rand (20R, 10R) des Stapels (20) oder der Stapelbegrenzungsstruktur (10) oder außerhalb der Stapelbegrenzungsstruktur (10) angeordnet und ausgebildet ist, und
- eine Steuerungseinrichtung (50), wobei die Steuerungseinrichtung (50) zum Vergleich der gemessenen äußeren Temperatur (T37) oder einer auf der gemessenen äußeren Temperatur (T37) basierenden Größe mit mindestens einer Temperaturvergleichsgröße (T37G), wobei die mindestens eine Temperaturvergleichsgröße (T37G) von mindestens einer der Pouchzellen (21) abhängig ist, und wobei die Steuerungseinrichtung (50) zur Steuerung des Akkupacks (1) in Abhängigkeit von einem Ergebnis des Vergleichs ausgebildet ist, und
- wobei die Steuerungseinrichtung (50) zur Steuerung der Abgabe der elektrischen Antriebsleistung (AL) oder einer Aufnahme einer elektrischen Ladeleistung (LL) ausgebildet ist und auf einer Seite (20V) des Stapels (20) angeordnet ist, und
- wobei der äußere Temperatursensor (37) auf einer abgewandten Seite (200) des Stapels (20) angeordnet ist.

2. Akkupack (1) nach Anspruch 1,
- wobei der äußere Temperatursensor (37) an einem Rand (20R) einer äußersten der Pouchzellen (21) angeordnet ist, oder
- wobei die mindestens eine Temperaturvergleichsgröße (T37G) von einer äußersten der Pouchzellen (21) abhängig ist.

3. Akkupack (1) nach einem der vorhergehenden Ansprüche,
- wobei die Stapelbegrenzungsstruktur (10) ein Stapelgehäuse ist.

4. Akkupack (1) nach einem der vorhergehenden Ansprüche, wobei der Akkupack (1) aufweist:
- einen inneren Temperatursensor (36), wobei der innere Temperatursensor (36) zur Messung einer inneren Temperatur (T36) des Stapels (20) in dem Stapel (20) angeordnet und ausgebildet ist, und
- wobei die Steuerungseinrichtung (50) zum Vergleich der gemessenen inneren Temperatur (T36) oder einer auf der gemessenen inneren Temperatur (T36) basierenden Größe mit mindestens einer Temperaturvergleichsgröße (T36G), wobei die mindestens eine Temperaturvergleichsgröße (T36G) von mindestens einer der Pouchzellen (21) abhängig ist, und wobei die Steuerungseinrichtung (50) zur Steuerung des Akkupacks (1) in Abhängigkeit von einem Ergebnis des Vergleichs ausgebildet ist.

5. Akkupack (1) nach Anspruch 4, wobei der Akkupack (1) aufweist:
- eine Sensoranordnung (30), wobei die Sensoranordnung (30) in dem Stapel (20) angeordnet ist, wobei die Sensoranordnung (30) sich über einen Großteil einer Fläche (21F) der Pouchzellen (21) erstreckt, wobei ein Großteil der Fläche (21F) mindestens 70 % der Fläche (21F) bedeutet, und derart ausgebildet ist, dass eine Höhe (20H) des Stapels (20) über die Erstreckung etwa gleich ist, und wobei die Sensoranordnung (30) den inneren Temperatursensor (36) aufweist.

6. Akkupack (1) nach Anspruch 5,
- wobei die Sensoranordnung (30) einen Drucksensor (31) aufweist, wobei der Drucksensor (31) zur Erfassung einer Druckkraft (DF) wirkend auf die Pouchzellen (21) ausgebildet ist, und
- wobei die Steuerungseinrichtung (50) zum Vergleich der erfassten Druckkraft (DF) oder einer auf der erfassten Druckkraft (DF) basierenden Größe mit einem Druckgrenzwert (DFG), wobei der Druckgrenzwert (DFG) von mindestens einer der Pouchzellen (21) vorgegeben ist, und wobei die Steuerungseinrichtung (50) zur Steuerung des Akkupacks (1) in Abhängigkeit von einem Ergebnis des Vergleichs ausgebildet ist.

7. Akkupack (1) nach einem der vorhergehenden Ansprüche, wobei der Akkupack (1) aufweist:
- mehrere Akkupackkontakte (71), wobei die Akkupackkontakte (71) zur elektrischen Verbindung des Akkupacks (1) und des Bearbeitungsgeräts (101) miteinander zur Versorgung des Bearbeitungsgeräts (101) mit elektrischer Antriebsleistung (AL) von dem Akkupack (1) ausgebildet sind, und
- einen Akkupackkontaktträger (70), wobei der Akkupackkontaktträger (70) die Akkupackkontakte (71) und den äußeren Temperatursensor (37) trägt und wobei der Akkupackkontaktträger (70) an der Stapelbegrenzungsstruktur (10) angeordnet ist.

8. Akkupack (1) nach einem der vorhergehenden Ansprüche, wobei der Akkupack (1) aufweist:
- ein Akkupackgehäuse (80), wobei die Pouchzellen (21) innerhalb des Akkupackgehäuses (80) angeordnet sind, und
- mindestens einen Luftkühlkreislauf (90) aufweisend eine Anzahl von Lufteinlassöffnungen (91) und eine Anzahl von Luftauslassöffnungen (92) in dem Akkupackgehäuse (80) für eine Kühlluftströmung (LS) von der Anzahl von Lufteinlassöffnungen (91) an den Pouchzellen (21) vorbei zu der Anzahl von Luftauslassöffnungen (92) zur Kühlung der Pouchzellen (21), wobei der äußere Temperatursensor (37) in dem Luftkühlkreislauf (90) zwischen der Anzahl von Lufteinlassöffnungen (91) und der Anzahl von Luftauslassöffnungen (92) angeordnet ist.

9. Akkupack (1) nach einem der vorhergehenden Ansprüche,
- wobei die Stapelbegrenzungsstruktur (10) eine thermische Verbindung mit den Pouchzellen (21) aufweist und thermisch leitfähig ist.

10. Akkupack (1) nach einem der vorhergehenden Ansprüche, wobei der Akkupack (1) aufweist:
- mindestens eine thermische Isolierung (60), wobei die mindestens eine thermische Isolierung (60) jeweils zwischen zwei der Pouchzellen (21) angeordnet ist und sich über einen Großteil der Fläche (21F) der Pouchzellen (21) erstreckt.

11. Akkupack (1) nach einem der vorhergehenden Ansprüche,
- wobei der Akkupack (1) eine maximale elektrische Antriebsleistung (MAL) von minimal 1 kW oder von maximal 10 kW aufweist, oder
- wobei der Akkupack (1) eine Nennspannung (NSP) von minimal 10 V oder von maximal 100 V aufweist, oder
- wobei der Akkupack (1) einen maximalen Energieinhalt (MEI) von minimal 100 Wh oder von maximal 1000 Wh aufweist, oder
- wobei der Akkupack (1) eine Masse (m1) von minimal 0,5 kg oder von maximal 10 kg aufweist, oder
- wobei der Akkupack (1) eine Höhe (1H) von minimal 2,5 cm oder von maximal 10 cm, oder eine Breite (1B) von minimal 5 cm oder von maximal 20 cm, oder eine Tiefe (1T) von minimal 7,5 cm oder von maximal 30 cm, aufweist.

12. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

13. Bearbeitungssystem (100) nach Anspruch 12,
- wobei das Bearbeitungsgerät (101) eine Akkuaufnahme (102), aufweist, wobei die Akkuaufnahme (102) zum Aufnehmen des Akkupacks (1) ausgebildet ist.

14. Bearbeitungssystem (100) nach Anspruch 12 oder 13,
- wobei das Bearbeitungsgerät (101) eine Säge (101'), ein Hoch-Entaster, ein Freischneider, eine Heckenschere, ein Heckenschneider, ein Blasgerät (101‴), ein Laubbläser, eine Astschere, ein Trennschleifer (101"), ein Kehrgerät, eine Kehrwalze, eine Kehrbürste, ein Rasenmäher, ein Vertikutierer oder eine Grasschere ist.

## Claims

1. Battery pack (1) for supplying an electrically driven treatment apparatus (101) with an electric driving power (AL), the battery pack (1) comprising:
- a stack limiting structure (10),
- a plurality of pouch cells (21), wherein the pouch cells (21) are disposed in a stack (20), wherein the stack (20) is disposed within the stack limiting structure (10),
- an outer temperature sensor (37), wherein the outer temperature sensor (37) is disposed and configured for measuring an outer temperature (T37) of the stack (20) outside the stack (20) at an edge (20R, 10R) of the stack (20) or the stack limiting structure (10) or outside the stack limiting structure (10), and
- a control device (50), wherein the control device (50) is configured for comparison of the measured outer temperature (T37) or a quantity based on the measured outer temperature (T37) to at least one temperature comparative value (T37G), wherein the at least one temperature comparative value (T37G) is a function of at least one of the pouch cells (21), and wherein the control device (50) is configured for controlling the battery pack (1) in response to a result of the comparison, and
- wherein the control device (50) is configured for controlling the output of the electric driving power (AL) and/or an input of electric charging power (LL) and is disposed on a side (20V) of the stack (20), and
- wherein the outer temperature sensor (37) is disposed on an averted side (20O) of the stack (20).

2. Battery pack (1) according to claim 1,
- wherein the outer temperature sensor (37) is disposed on an edge (20R) of an outermost of the pouch cells (21), or
- wherein the at least one temperature comparative value (T37G) is a function of an outermost of the pouch cells (21).

3. Battery pack (1) according to any of the preceding claims,
- wherein the stack limiting structure (10) is a stack housing.

4. Battery pack (1) according to any of the preceding claims, the battery pack (1) comprising:
- an inner temperature sensor (36), wherein the inner temperature sensor (36) is disposed and configured for measuring an inner temperature (T36) of the stack (20) in the stack (20), and
- wherein the control device (50) is configured for comparison of the measured inner temperature (T36) or a quantity based on the measured inner temperature (T36) to at least one temperature comparative value (T36G), wherein the at least one temperature comparative value (T36G) is a function of at least one of the pouch cells (21), and wherein the control device (50) is configured for controlling the battery pack (1) in response to a result of the comparison.

5. Battery pack (1) according to claim 4, the battery pack (1) comprising:
- a sensor arrangement (30), wherein the sensor arrangement (30) is disposed in the stack (20), wherein the sensor arrangement (30) extends across a major part of a surface (21 F) of the pouch cells (21), wherein a major part of the surface (21F) means at least 70 % of the surface (21F), and is configured such that a height (20H) of the stack (20) across the extension is approximately equal, and wherein the sensor arrangement (30) has the inner temperature sensor (36).

6. Battery pack (1) according to claim 5,
- wherein the sensor arrangement (30) has a pressure sensor (31), wherein the pressure sensor (31) is configured for detecting a pressure force (DF) acting on the pouch cells (21), and
- wherein the control device (50) is configured for comparison of the detected pressure force (DF) or a quantity based on the detected pressure force (DF) to a pressure limit value (DFG), wherein the pressure limit value (DFG) is predetermined by at least one of the pouch cells (21), and wherein the control device (50) is configured for controlling the battery pack (1) in response to a result of the comparison.

7. Battery pack (1) according to any of the preceding claims, the battery pack (1) comprising:
- a plurality of battery pack contacts (71), wherein the battery pack contacts (71) are configured for electrical connection of the battery pack (1) and the treatment apparatus (101) with each other for supplying the treatment apparatus (101) with electric driving power (AL) from the battery pack (1), and
- a battery pack contact holder (70), wherein the battery pack contact holder (70) holds the battery pack contacts (71) and the outer temperature sensor (37), and wherein the battery pack contact holder (70) is disposed on the stack limiting structure (10).

8. Battery pack (1) according to any of the preceding claims, the battery pack (1) comprising:
- a battery pack housing (80), wherein the pouch cells (21) are disposed within the battery pack housing (80), and
- at least one air cooling circuit (90) including a number of air inlet openings (91) and a number of air outlet openings (92) in the battery pack housing (80) for a cooling air flow (LS) from the number of air inlet openings (91) on the pouch cells (21) passing to the number of air outlet openings (92) for cooling the pouch cells (21), wherein the outer temperature sensor (37) is disposed in the air cooling circuit (90) between the number of air inlet openings (91) and the number of air outlet openings (92).

9. Battery pack (1) according to any of the preceding claims,
- wherein the stack limiting structure (10) has a thermal connection to the pouch cells (21) and is thermally conducting.

10. Battery pack (1) according to any of the preceding claims, the battery pack (1) comprising:
- at least one thermal insulation (60), wherein the at least one thermal insulation (60) is disposed respectively between two of the pouch cells (21) and extends across a major part of the surface (21F) of the pouch cells (21).

11. Battery pack (1) according to any of the preceding claims,
- wherein the battery pack (1) has a maximum electric driving power (MAL) of a minimum of 1 kW or of a maximum of 10 kW, or
- wherein the battery pack (1) has a nominal voltage (NSP) of a minimum of 10 V or of a maximum of 100 V, or
- wherein the battery pack (1) has a maximum energy content (MEI) of a minimum of 100 Wh or of a maximum of 1000 Wh, or
- wherein the battery pack (1) has a mass (m1) of a minimum of 0.5 kg or of a maximum of 10 kg, or
- wherein the battery pack (1) has a height (1H) of a minimum of 2.5 cm or of a maximum of 10 cm, or a width (1B) of a minimum of 5 cm or of a maximum of 20 cm, or a depth (1T) of a minimum of 7.5 cm or of a maximum of 30 cm.

12. Treatment system (100), the treatment system (100) comprising:
- a battery pack (1) according to any of the preceding claims, and
- an electrically driven treatment apparatus (101),
- wherein the battery pack (1) and the treatment apparatus (101) are configured for electrical connection with each other for supplying the treatment apparatus (101) with electric driving power (AL) from the battery pack (1).

13. Treatment system (100) according to claim 12,
- wherein the treatment apparatus (101) has an accu accommodation (102), wherein the accu accommodation (102) is configured for accommodating the battery pack (1).

14. Treatment system (100) according to claim 12 or 13,
- wherein the treatment apparatus (101) is a saw (101'), a pole pruner, a clearing saw, a brush cutter, hedge shears, a hedge cutter, a blower device (101‴), a leaf blower, a lopper, a cutoff grinder (101"), a sweeper device, a sweeper roller, a sweeper brush, a lawn mower, a dethatcher or a grass trimmer.

## Revendications

1. Bloc d'accumulateurs (1) pour l'alimentation d'un outil de travail (101) entraîné électriquement avec une puissance d'entraînement électrique (AL), le bloc d'accumulateurs (1) présentant :
- une structure (10) de délimitation d'empilement,
- une pluralité de cellules de poche (21), les cellules de poche (21) étant disposées en un empilement (20), l'empilement (20) étant disposée à l'intérieur de la structure (10) de délimitation d'empilement,
- un capteur de température extérieure (37), le capteur de température extérieure (37) étant disposé et conçu de façon à mesurer une température extérieure (T37) de l'empilement (20) à l'extérieur de l'empilement (20) sur un bord (20R, 10R) de l'empilement (20) ou de la structure (10) de délimitation d'empilement ou à l'extérieur de la structure (10) de délimitation d'empilement, et
- un dispositif de commande (50), le dispositif de commande (50) étant conçu pour comparer la température extérieure mesurée (T37) ou une grandeur basée sur la température extérieure mesurée (T37) avec au moins une grandeur de comparaison de température (T37G), ladite au moins une grandeur de comparaison de température (T37G) dépendant d'au moins une des cellules de poche (21), et le dispositif de commande (50) étant conçu pour commander le bloc d'accumulateurs (1) en fonction d'un résultat de la comparaison, et
- le dispositif de commande (50) étant conçu pour commander la fourniture de la puissance d'entraînement électrique (AL) ou une absorption d'une puissance de charge électrique (LL) et étant disposé sur un côté (20V) de l'empilement (20), et
- le capteur de température extérieur (37) étant disposé sur un côté opposé (20O) de l'empilement (20).

2. Bloc d'accumulateurs (1) selon la revendication 1,
- dans lequel le capteur de température extérieure (37) est disposé sur un bord (20R) d'une cellule la plus extérieure des cellules de poche (21), ou
- dans lequel ladite au moins une grandeur de comparaison de température (T37G) dépend d'une cellule la plus extérieure desdites cellules de poche (21).

3. Bloc d'accumulateurs (1) selon l'une des revendications précédentes,
- dans lequel la structure (10) de délimitation d'empilement est un boîtier de pile.

4. Bloc d'accumulateurs (1) selon l'une des revendications précédentes, le bloc d'accumulateur (1) présentant :
- un capteur de température intérieure (36), le capteur de température intérieure (36) étant disposé et configuré pour mesurer une température intérieure (T36) de pile (20) dans l'empilement (20), et
- dans lequel le dispositif de commande (50) est conçu pour comparer la température intérieure mesurée (T36) ou une grandeur basée sur la température intérieure mesurée (T36) avec au moins une grandeur de comparaison de température (T36G), ladite au moins une grandeur de comparaison de température (T36G) dépendant d'au moins une des cellules de poche (21), et dans lequel le dispositif de commande (50) est conçu pour commander le bloc d'accumulateurs (1) en fonction d'un résultat de la comparaison.

5. Bloc d'accumulateurs (1) selon la revendication 4, le bloc d'accumulateur (1) présentant :
- un agencement de capteur (30), l'ensemble de capteurs (30) étant disposé dans l'empilement (20), l'agencement de capteur (30) s'étendant sur une majeure partie d'une surface (21F) des cellules de la poche (21), une majeure partie de la surface (21F) signifiant au moins 70% de la surface (21F), et étant configuré de telle sorte qu'une hauteur (20H) de l'empilement (20) soit sensiblement égale sur l'étendue, et l'agencement de capteur (30) comprenant le capteur de température intérieure (36).

6. Bloc d'accumulateurs (1) selon la revendication 5,
- dans lequel l'ensemble de capteurs (30) présente un capteur de pression (31), le capteur de pression (31) étant conçu pour détecter une force de pression (DF) agissant sur les cellules de poche (21), et
- dans lequel le dispositif de commande (50) est conçu de façon à comparer la force de pression (DF) détectée ou une grandeur basée sur la force de pression (DF) détectée avec une valeur limite de pression (DFG), la valeur limite de pression (DFG) étant prédéfinie par au moins l'une des cellules de poche (21), et le dispositif de commande (50) est conçu pour commander le bloc d'accumulateurs (1) en fonction d'un résultat de la comparaison.

7. Bloc d'accumulateurs (1) selon l'une des revendications précédentes, le bloc d'accumulateur (1) présentant :
- une pluralité de contacts (71) de bloc d'accumulateurs, les contacts (71) de bloc d'accumulateurs étant configurés pour relier électriquement le bloc d'accumulateurs (1) et l'outil de travail (101) entre eux de façon à alimenter l'outil de travail (101) en puissance électrique d'entraînement (AL) à partir du bloc d'accumulateurs (1), et
- un support (70) de contacts de bloc d'accumulateurs, le support (70) de contacts de bloc d'accumulateurs portant les contacts (71) de bloc d'accumulateurs et le capteur de température extérieur (37), et le support (70) de contacts de bloc d'accumulateurs étant disposé sur la structure (10) de délimitation d'empilement.

8. Bloc d'accumulateurs (1) selon l'une des revendications précédentes, dans lequel le bloc d'accumulateurs (1) comprend :
- un boîtier de bloc d'accumulateurs (80), les cellules de poche (21) étant disposées à l'intérieur du boîtier de bloc d'accumulateurs (80), et
- au moins un circuit (90) de refroidissement par air comprenant une pluralité d'ouvertures (91) d'entrée d'air et une pluralité d'ouvertures (92) de sortie d'air dans le boîtier du bloc d'accumulateurs (80) pour un écoulement d'air de refroidissement (LS) depuis la pluralité d'ouvertures (91) d'entrée d'air au-delà des cellules de poche (21) jusqu'à la pluralité d'ouvertures (92) de sortie d'air de façon à refroidir les cellules de poche (21), le capteur de température extérieure (37) étant disposé dans le circuit (90) de refroidissement par air entre le nombre d'ouvertures (91) d'entrée d'air et le nombre d'ouvertures (92) de sortie d'air.

9. Bloc d'accumulateurs (1) selon l'une des revendications précédentes,
- dans lequel la structure (10) de délimitation d'empilement présente une liaison thermique avec les cellules de poche (21) et est thermiquement conductrice.

10. Bloc d'accumulateurs (1) selon l'une des revendications précédentes, dans lequel le bloc d'accumulateurs (1) présente :
- au moins un isolant thermique (60), ledit au moins un isolant thermique (60) étant disposé respectivement entre deux des cellules de poche (21) et s'étendant sur une grande partie de la surface (21F) des cellules de poche (21).

11. Bloc d'accumulateurs (1) selon l'une des revendications précédentes,
- dans lequel le bloc d'accumulateurs (1) présente une puissance d'entraînement électrique maximale (MAL) d'au moins 1 kW ou d'au maximum 10 kW, ou
- dans lequel le bloc d'accumulateurs (1) présente une tension nominale (NSP) au minimum de 10 V et/ou au maximum de 100 V, et/ou
- dans lequel le bloc d'accumulateurs (1) présente un contenu en énergie maximal (MEI) au minimum de 100 Wh et/ou au maximum de 1000 Wh, et/ou
- dans lequel le bloc d'accumulateurs (1) présente une masse (m1) au minimum de 0,5 kg et/ou au maximum de 10 kg, et/ou
- dans lequel le bloc d'accumulateur (1) présente une hauteur (1H) au minimum de 2,5 cm et/ou au maximum de 10 cm, et/ou une largeur (1B) au minimum de 5 cm et/ou au maximum de 20 cm, et/ou une profondeur (1T) au minimum de 7,5 cm et/ou au maximum de 30 cm.

12. Système de traitement (100), le système de traitement (100) présentant :
- un bloc d'accumulateurs (1) selon l'une quelconque des revendications précédentes, et
- un outil de travail (101) à entraînement électrique,
- le bloc d'accumulateurs (1) et l'outil de travail (101) étant conçus de façon à être reliés électriquement l'un à l'autre afin d'alimenter l'outil de travail (101) en puissance d'entraînement électrique (AL) à partir du bloc d'accumulateurs (1).

13. Système de travail (100) selon la revendication 12,
- dans lequel l'outil de travail (101) comporte un logement de batterie (102), le logement de batterie (102) étant configuré pour recevoir le bloc d'accumulateurs (1) .

14. Système de travail (100) selon la revendication 12 ou la revendication 13,
- dans lequel l'outil de travail (101) est une scie (101'), une élagueuse haute, une débroussailleuse, une cisaille à haies, un taille-haies, un souffleur (101' ''), un souffleur de feuilles, une élagueuse, une tronçonneuse à disque (101''), un appareil de balayage, un rouleau de balayage, une brosse de balayage, une tondeuse à gazon, un scarificateur ou une cisaille à herbe.
